# EUROPEAN PATENT SPECIFICATION

(11) **EP 3 787 136 B1**
(45) Date of publication and mention of the grant of the patent: **07.06.2023**
(21) Application number: 18916867.7
(22) Date of filing: 25.04.2018
(51) Int. Cl.: H02B 11/133, H02B 11/173, H02B 1/36

(54) **CONTROL CENTER FUNCTION UNIT AND CONTROL CENTER COMPRISING SUCH FUNCTION UNIT**
FUNKTIONSEINHEIT FÜR STEUERZENTRALE UND STEUERZENTRALE UMFASSEND EINER SOLCHEN FUNKTIONSEINHEIT
UNITÉ FONCTIONNELLE DE CENTRE DE COMMANDE ET CENTRE DE COMMANDE COMPRENANT UNE TELLE UNITÉ FONCTIONNELLE

(43) Date of publication of application: 03.03.2021
(73) Proprietor: Mitsubishi Electric Corporation, Tokyo 100-8310 (JP)
(72) Inventor: SEKI, Koichiro, Tokyo 100-8310 (JP)
(74) Representative: Witte, Weller & Partner Patentanwälte mbB
(86) International application number: PCT/JP2018/016735
(87) International publication number: WO 2019/207665

(56) References cited:
- EP-A1- 3 280 015
- WO-A1-2013/168300
- CN-U- 201 868 768
- JP-A- S6 485 506
- JP-A- 2016 174 497
- JP-A- 2016 174 497
- JP-A- 2017 098 182

## Description

### TECHNICAL FIELD

The present disclosure relates to a control center function unit having a drawing interlock mechanism for safely performing drawing/insertion from/into a control center housing, and a control center using the function unit.

### BACKGROUND ART

In these days, in plants such as a factory, a water and sewerage management facility, and a power plant, multiple motors are used for driving machines such as pumps. For centralizing control, protection, measurement, and monitoring of these motors, a control center having stored therein a plurality of function units each of which is one circuit component unit including a main circuit and an auxiliary circuit for executing predetermined functions, is widely used. In the control center, the function units are detachably mounted so that each unit can be drawn for replacement, repair, or the like.

Generally, circuit breakers are provided in these function units, and a drawing interlock mechanism is provided so that the circuit breaker in a closed state cannot be drawn from the control center housing (see Patent Documents 1, 2).

That is, along with rotation of an operation knob for switching between closing and opening of the circuit breaker in the function unit, a rotation cam performs a rotational movement, and this rotational movement is converted into a linear movement by an interlock rod connected to the rotation cam. In a state in which the function unit is stored in the control center housing, an end of the interlock rod which linearly moves is engaged with a part of a compartment partition plate between the function units or the control center housing, whereby the function unit is restricted from being drawn. In addition, in a halfway drawn state of the function unit, an engagement hole of the control center housing and the end position of the interlock rod do not coincide with each other, and therefore they cannot be engaged with each other and the circuit breaker will not be erroneously brought into a closed state.

Patent Document 3, according to its abstract, relates to a low-voltage drawer cabinet, which belongs to the technical field of power distribution cabinets. A drawer locking mechanism and a switch off locking mechanism are mounted on a bottom plate of a drawer, the lower end of a drawer locking pin of the drawer locking mechanism points to an interlayer partition, a drawer locking pin driving shaft is inserted into the upper portion of the drawer locking pin horizontally, the rear end of a drawer pushing control plate is a pushing end, a 7-shaped guide groove for driving the drawer locking pin to move vertically is arranged at the front end of the drawer pushing control plate, the drawer locking pin driving shaft is vertically inserted into the 7-shaped guide groove, and two ends of a return spring are respectively connected to the drawer pushing control plate and a drawer locking mechanism casing. The lower end of an off locking pin of the switch off locking mechanism points to the interlayer partition vertically, an ascending drive hole and a descending drive hole are respectively arranged at the upper end of the off locking pin, an ascending drive claw and a descending drive claw are arranged on the circumference of a cam, the middle of the end face of the cam is connected to a switch on and off connecting rod, the interlayer partition is provided with an isolating position, a test position, a connecting position and a switch-off lock hole.

Patent Document 4, according to its abstract, relates to a control center superior in safety whereby it is possible, when an operating handle mechanism is in an ON state, to prevent an insertion/removal handle from being inserted into an insertion/removal handle insertion slot. In a control center including a functional unit which is housed on a baseplate of a functional unit housing space of a casing and which is equipped with a molded case circuit breaker, the functional unit is provided with an operating handle mechanism which turns ON/OFF the molded case circuit breaker; an insertion/removal handle insertion slot into which to insert an insertion/removal handle; and a protector which is linked to the operating handle mechanism, wherein when the operating handle mechanism is in an ON state, an insertion/removal handle insertion prevention portion covers the insertion/removal handle insertion slot, thus preventing the insertion/removal handle from being inserted into the insertion/removal handle insertion slot.

### CITATION LIST

### PATENT DOCUMENT

Patent Document 1: Japanese Laid-Open Patent Publication No. 61-26407
Patent Document 2: Japanese Laid-Open Patent Publication No. 2016-174497
Patent Document 3: CN 201 868 768 U
Patent Document 4: EP 3 280 015 A1

### SUMMARY OF THE INVENTION

### PROBLEMS TO BE SOLVED BY THE INVENTION

However, in the conventional drawing interlock mechanism provided to the function unit, a rotary part of the operation knob and the rotation cam are connected at one point, and therefore the angle of the rotation cam may change due to rotation. In addition, when the interlock rod linearly moves along with rotation of the rotation cam, the interlock rod may deflect in a transverse direction at the same time, so that the engagement position with the control center housing or the like sometimes varies.

At this time, the interlock rod and the control center housing might not be fully engaged with each other, so that there is a possibility that the circuit breaker of the function unit can be drawn from the housing even when the circuit breaker is in a closed state, and also there is a possibility that the circuit breaker is brought into a closed state while the function unit is halfway drawn.

The present disclosure has been made to solve the above problem, and an object of the present disclosure is to reduce change in the angle of the rotation cam due to rotation of the operation knob and reduce a transverse-direction deflection of the interlock rod, thereby preventing the function unit from being erroneously drawn from the housing when the circuit breaker of the function unit is in a closed state, and conversely, preventing the circuit breaker from being erroneously brought into a closed state while the function unit is halfway drawn, thus improving safety in working.

### SOLUTION TO THE PROBLEMS

A function unit according to the present disclosure has a drawing interlock mechanism including: an opening/closing operation rod for performing, through rotation, switching operation between opening and closing of a circuit breaker; a rotation cam which is connected with the opening/closing operation rod and is configured to perform a rotational movement, the rotation cam being provided with a first guide for assisting the rotational movement; and an interlock rod which is connected with the rotation cam and is configured to convert the rotational movement of the rotation cam into a linear movement, the interlock rod having a bent plate shape, the interlock rod being provided with a second guide for assisting the linear movement, and configured such that, when the circuit breaker is closed, a part of the interlock rod is engageable with an engagement hole formed in a control center housing, wherein a metal fitting having a round hole corresponding to the rotational movement of the rotation cam and an elongated hole corresponding to the linear movement of the interlock rod is provided so as to surround a periphery of the opening/closing operation rod, the assisting for the rotational movement by the first guide is performed by sliding of the first guide along an arc-shaped edge of the round hole, and the assisting for the linear movement by the second guide is performed by sliding of the second guide along an edge of the elongated hole.

### EFFECT OF THE INVENTION

In the function unit having the drawing interlock mechanism and the control center using the function unit according to the present disclosure, change in the angle of the rotation cam and variation in movement of the interlock rod are reduced, whereby the function unit can be prevented from being drawn from the control center housing when the circuit breaker is in a closed state. In addition, the circuit breaker is prevented from being brought into a closed state due to erroneous operation while the function unit is halfway drawn. Thus, safety in working can be enhanced.

### BRIEF DESCRIPTION OF THE DRAWINGS

[FIG. 1] FIG. 1 is a front view of an operation handle when a circuit breaker is in an opened state.
[FIG. 2] FIG. 2 is a front view of the operation handle when the circuit breaker is in a closed state.
[FIG. 3] FIG. 3 shows the structure of a function unit when the circuit breaker is in an opened state in embodiment 1, in which FIG. 3A is a front view (a front panel of the circuit breaker and the like are removed), and FIG. 3B is a sectional view along line A-A' in FIG. 3A.
[FIG. 4] FIG. 4 shows the structure of the function unit when the circuit breaker is in a closed state in embodiment 1, in which FIG. 4A is a front view (the front panel of the circuit breaker and the like are removed), and FIG. 4B is a sectional view along line B-B' in FIG. 4A.
[FIG. 5] FIG. 5 is an exploded perspective view of a drawing interlock mechanism of the function unit in embodiment 1.
[FIG. 6] FIG. 6 is a sectional view of the function unit when the circuit breaker is brought into a closed state at a halfway drawn position from a control center in embodiment 1.
[FIG. 7] FIG. 7 shows the structure of the function unit when the circuit breaker is in an opened state in embodiment 2, in which FIG. 7A is a front view (the front panel of the circuit breaker and the like are removed), and FIG. 7B is a sectional view along line C-C' in FIG. 7A.
[FIG. 8] FIG. 8 shows the structure of the function unit when the circuit breaker is in a closed state in embodiment 2, in which FIG. 8A is a front view (the front panel of the circuit breaker and the like are removed), and FIG. 8B is a sectional view along line D-D' in FIG. 8A.

### DESCRIPTION OF EMBODIMENTS

In the description of embodiments and the drawings, parts denoted by the same reference characters are the same or corresponding parts.

### Embodiment 1

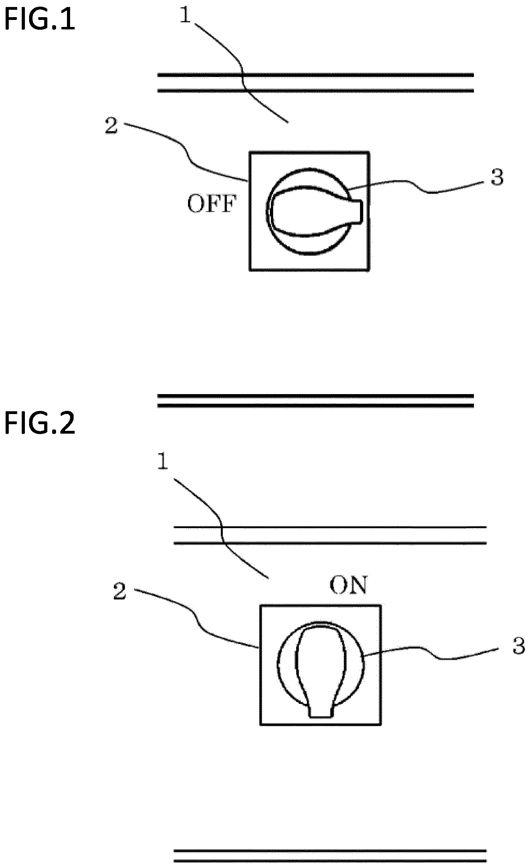

Hereinafter, embodiment 1 will be described with reference to FIG. 1 to FIG. 6. FIG. 1 and FIG. 2 show a part around an operation handle 2 of a circuit breaker 4. FIG. 1 is a front view when an operation knob 3 of the operation handle 2 is in an opened state, and FIG. 2 is a front view when the operation knob 3 of the operation handle 2 is in a closed state.

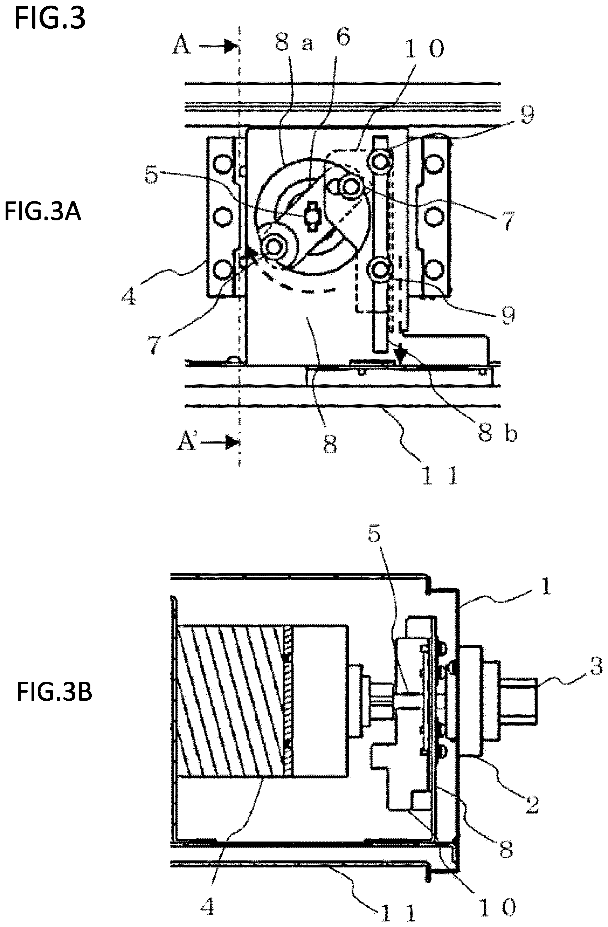

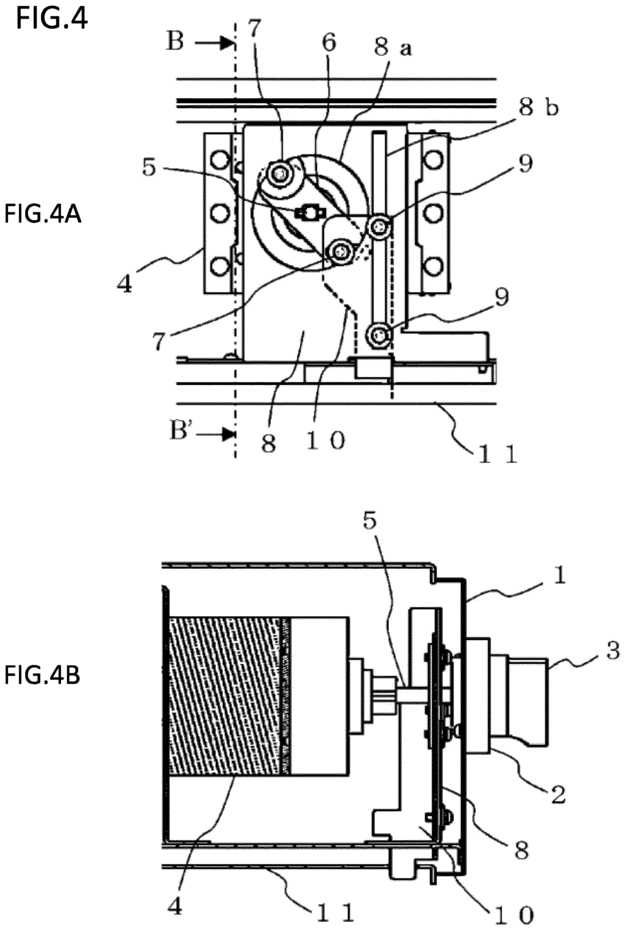

FIG. 3A and FIG. 4A are front views of the circuit breaker 4, in which, for convenience of description, a front panel 1, the operation handle 2, and the operation knob 3 are omitted so that the internal structure is visible. FIG. 3A shows the circuit breaker 4 in an opened state, and FIG. 4A shows the circuit breaker 4 in a closed state. FIG. 3B and FIG. 4B are sectional views along line A-A' in FIG. 3A and line B-B' in FIG. 4A, respectively. A broken-line arrow shown in FIG. 3 indicates the operation direction when the operation knob 3 of the operation handle 2 is rotated to switch between closing and opening of the circuit breaker 4.

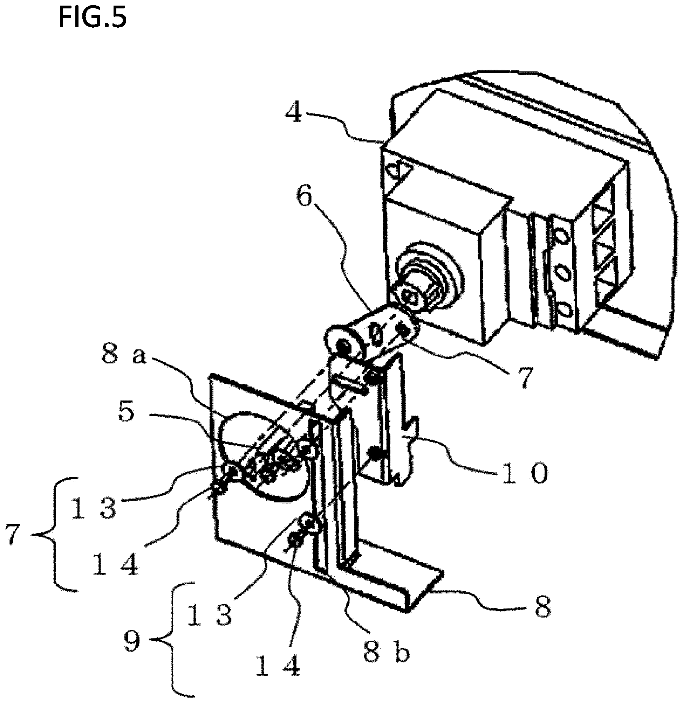

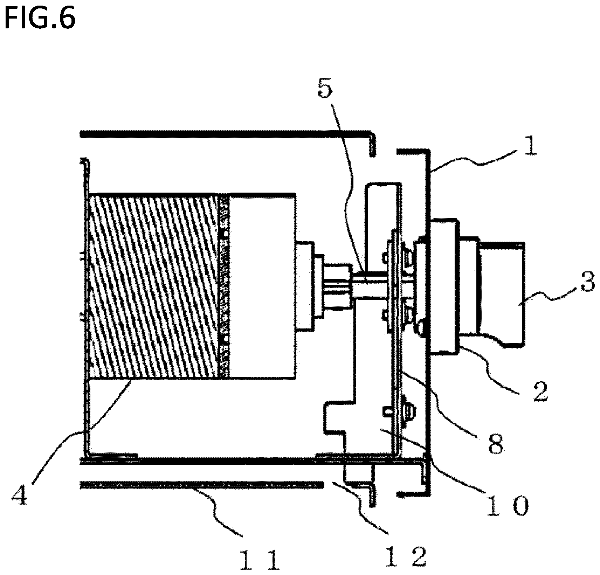

FIG. 5 is an exploded perspective view of a drawing interlock mechanism of the function unit, and FIG. 6 is a sectional view when the circuit breaker is brought into a closed state at a position where the function unit is halfway drawn from the control center.

### <Structure view of drawing interlock mechanism>

The structure of the drawing interlock mechanism according to the present disclosure will be described with reference to, mainly, FIG. 3A which is a front view showing the internal structure of the function unit, FIG. 3B which is a sectional view thereof along line A-A', and FIG. 5 which is an exploded perspective view of the interlock mechanism. In FIG. 3A, as described above, the front panel 1, the operation handle 2, and the operation knob 3 shown in FIG. 1 and FIG. 2 are omitted, and the circuit breaker 4 body and an opening/closing operation rod 5 to which the operation knob 3 is attached are shown. A rotation cam 6 is attached to the opening/closing operation rod 5, and further, as shown in FIG. 5, an interlock rod 10 having a bent plate shape is provided.

As shown in FIG. 5, a metal fitting 8 located around the opening/closing operation rod 5 and for fixing the circuit breaker 4 is provided on the front side of the circuit breaker 4 (right side in FIG. 3B). The metal fitting 8 has a round hole 8a and an elongated hole 8b.

Two first guides 7 are formed at the rotation cam 6. In the present embodiment, as shown in detail in FIG. 5, the first guide 7 is formed by a pin 14 having a large width at the head part and provided with a plain washer 13, and an arc-shaped edge of the round hole 8a formed in the metal fitting 8 is held between the rotation cam 6 and the plain washer 13 part of the first guide 7. Of the two first guides 7, the first guide 7 at the upper right in FIG. 3A also serves to connect the interlock rod 10 and the rotation cam 6.

At the elongated hole 8b formed in the metal fitting 8, two second guides 9 are formed so that the interlock rod 10 can slide along the long side of the elongated hole 8b. In the present embodiment, as with the first guide 7, the second guide 9 is formed by a pin 14 having a large width at the head part of the second guide and provided with a plain washer 13, as shown in FIG. 5. The width at the plain washer 13 part of the second guide 9 is greater than the width in the short-side direction of the elongated hole 8b, and an edge of the elongated hole 8b is held between the interlock rod 10 and the plain washer 13 part of the second guide 9.

### <Operation of drawing interlock mechanism>

FIG. 3 shows an opened state of the circuit breaker 4. When the operation knob 3 of the operation handle 2 is rotated by about 90° as indicated by the broken-line arrow, the opening/closing operation rod 5 is rotated so that the circuit breaker 4 comes into a closed state. At this time, when the opening/closing operation rod 5 of the circuit breaker 4 is rotated, the rotation cam 6 is rotated along with this.

At this time, the first guides 7 assist the rotational movement of the rotation cam 6, and the second guides 9 assist the linear movement of the interlock rod 10. That is, the rotation cam 6 and the two first guides 7 formed at the rotation cam 6 slide while holding an arc-shaped edge of the round hole 8a formed in the metal fitting 8. In addition, the interlock rod 10 and the two second guides 9 slide while holding an edge of the elongated hole 8b formed in the metal fitting 8. Thus, the rotation cam 6 performs a rotational movement without changing the attachment angle with respect to the opening/closing operation rod 5, whereby the rotational movement of the rotation cam 6 can be stably converted into a linear movement of the interlock rod 10.

In the present embodiment, the interlock rod 10 moves directly downward as indicated by a broken-line arrow in FIG. 3A, so that an end of the interlock rod 10 is engaged with an engagement hole 12 formed in a compartment partition plate 11 partitioning the inside of the control center housing, as shown in FIG. 4A. As a result, it becomes impossible to draw the function unit when the circuit breaker 4 is in a closed state.

On the other hand, in the present embodiment, when the circuit breaker 4 is in a closed state, the end of the interlock rod 10 always needs to be engaged with the engagement hole 12. Therefore, in a halfway drawn state of the function unit where the end of the interlock rod 10 cannot be engaged (FIG. 6), the circuit breaker 4 cannot be erroneously brought into a closed state.

### <Effects of the present embodiment>

As described above, the first guides 7 and the second guides 9 are respectively formed at the rotation cam 6 and the interlock rod 10, and slide on edges of the round hole 8a and the elongated hole 8b formed in the metal fitting 8. Therefore, in a closed state of the circuit breaker, the interlock rod 10 is always engaged with the engagement hole 12, so that the function unit cannot be drawn in a closed state of the circuit breaker, and the circuit breaker cannot be erroneously brought into a closed state while the function unit is halfway drawn. Thus, work can be safely performed.

Further, in the present embodiment, variation in the length of the linear movement of the interlock rod 10 is reduced, and the interlock rod 10 does not interfere with the adjacent function unit. Thus, work can be stably performed.

In the present embodiment, the rotation cam 6 rotates while sliding along an arc-shaped edge of the round hole 8a formed in the metal fitting 8, using two first guides 7. However, the number of the first guides 7 is not particularly limited. Basically, the same effects can be obtained with one or more first guides 7.

In the present embodiment, in order to reduce variation in the linear movement of the interlock rod 10, sliding on an edge of the elongated hole 8b formed in the metal fitting 8 is performed using two second guides 9. However, the number of the second guides 9 is also not particularly limited. Basically, the same effects can be obtained with one or more second guides 9.

In the present embodiment, the pins 14 provided with the plain washers 13 are used as the first guides 7 and the second guides 9, and edges of the round hole 8a and the elongated hole 8b are held between the plain washers 13 and the rotation cam 6 and between the plain washers 13 and the interlock rod 10. However, the same effects can be obtained as long as the guide parts can slide on edges of the round hole 8a and the elongated hole 8b so as to assist the rotational movement of the rotation cam 6 and the linear movement of the interlock rod 10. Thus, the sizes, shapes, structures, and the like of the guide parts are not particularly limited.

### Embodiment 2

In the present embodiment, the movement direction of the interlock rod 10 is different as compared to embodiment 1. In embodiment 1, the end of the interlock rod 10 is engaged with the engagement hole 12 formed in the compartment partition plate 11 present in the downward direction, so as to restrict a drawing operation. On the other hand, the present embodiment is different in that the interlock rod 10 moves in the left-right direction and an engagement hole 16 is formed in a control center housing pillar 15 at the left side.

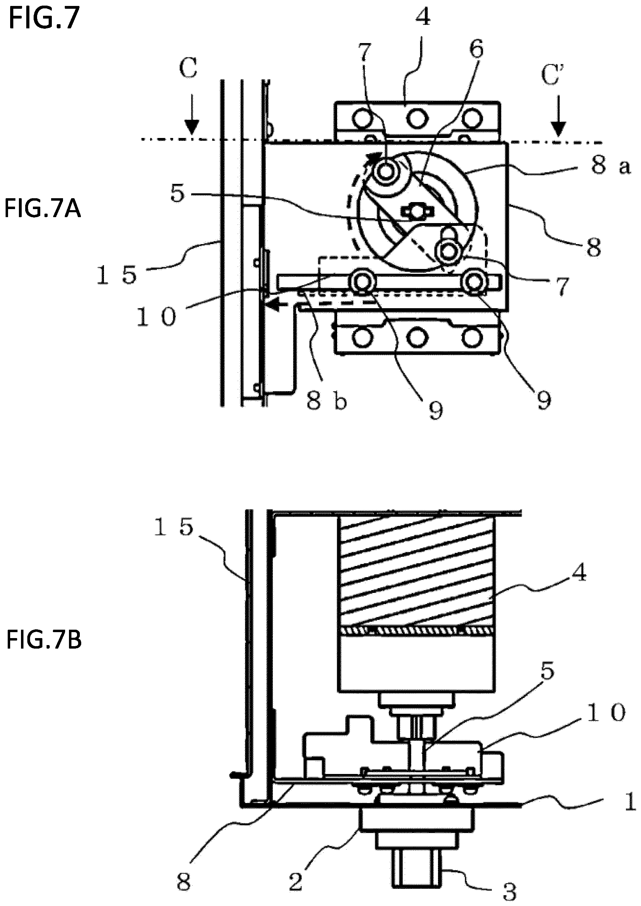

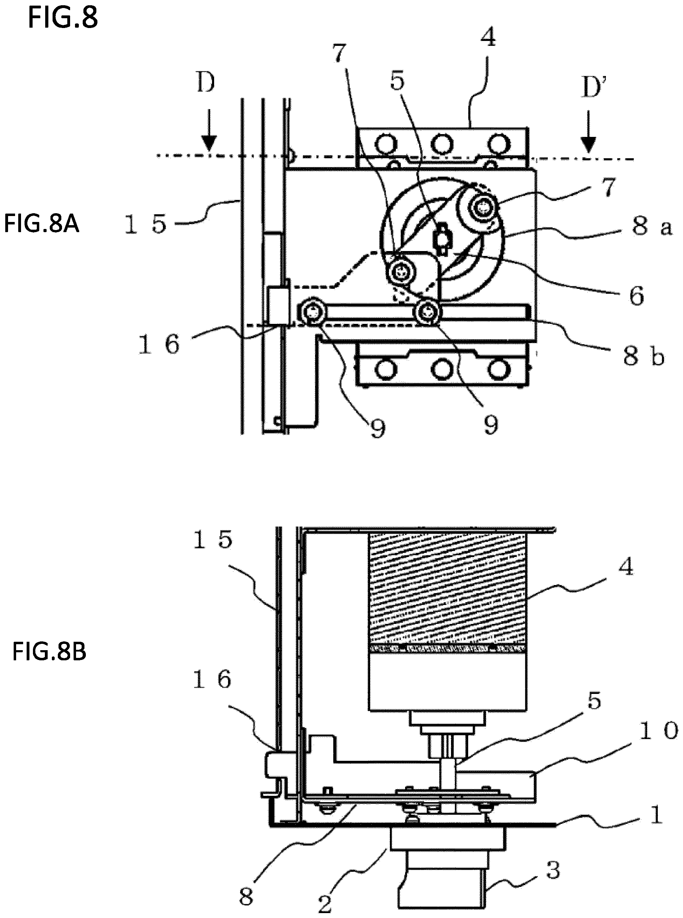

FIG. 7A is a front view of the function unit, in which the front panel 1 of the circuit breaker 4 and the like are omitted, and FIG. 7B is a sectional view thereof along line C-C'. Similarly, FIG. 8A is a front view of the function unit, and FIG. 8B is a sectional view thereof along line D-D'. FIG. 7A and FIG. 7B show an opened state of the circuit breaker 4, and FIG. 8A and FIG. 8B show a closed state of the circuit breaker 4.

In FIG. 7A, when the opening/closing operation rod 5 is rotated, the rotation cam 6 is rotated along with this, and the rotational movement leads to movement of the interlock rod 10, and this is the same as in embodiment 1. However, while the interlock rod 10 performs a linear movement in the up-down direction in embodiment 1, the present embodiment is different in that the interlock rod 10 moves in the left-right direction.

In embodiment 1, the end of the interlock rod 10 moving in the up-down direction is engaged with the engagement hole 12 formed in the compartment partition plate 11 located on the lower surface side of the circuit breaker 4. On the other hand, the present embodiment is different in that, as shown in FIG. 8A, the end of the interlock rod 10 moving in the left-right direction is engaged with the engagement hole 16 formed in the control center housing pillar 15 located on the left surface side of the circuit breaker 4.

In the present embodiment, when the circuit breaker 4 is brought into a closed state, the interlock rod 10 is inserted into the left-side engagement hole 16 formed in the control center housing pillar 15, whereby the function unit can be prevented from being drawn. In addition, in a state in which the function unit is drawn and the positions of the engagement hole 16 formed in the control center housing pillar 15 and the interlock rod 10 are not aligned with each other, the circuit breaker 4 cannot be brought into a closed state. Thus, work can be safely performed.

In the present embodiment, the engagement hole 16 is formed in the control center housing pillar 15 at the left side of the circuit breaker 4. However, the position of the engagement hole 16 is not limited to the left side. The same functions and effects can be obtained even in the case where an engagement hole 16 is formed in a control center housing pillar 15 at the right side of the circuit breaker 4.

Although the disclosure is described above in terms of various exemplary embodiments and implementations, it should be understood that the various features, aspects, and functionality described in one or more of the individual embodiments are not limited in their applicability to the particular embodiment with which they are described, but instead can be applied, alone or in various combinations to one or more of the embodiments of the disclosure, as long as they stay within the scope of protection of the claims.

It is therefore understood that numerous modifications which have not been exemplified can be devised without departing from the scope of the present disclosure. For example, at least one of the constituent components may be modified, added, or eliminated. At least one of the constituent components mentioned in at least one of the preferred embodiments may be selected and combined with the constituent components mentioned in another preferred embodiment. All these modifications, however, shall always be understood within the scope of protection of the appended claims.

### DESCRIPTION OF THE REFERENCE CHARACTERS

- 1: front panel
- 2: operation handle
- 3: operation knob
- 4: circuit breaker
- 5: opening/closing operation rod
- 6: rotation cam
- 7: first guide
- 8: metal fitting
- 8a: round hole
- 8b: elongated hole
- 9: second guide
- 10: interlock rod
- 11: compartment partition plate
- 12: engagement hole
- 13: plain washer
- 14: pin
- 15: control center housing pillar
- 16: engagement hole

## Claims

1. A control center function unit having a drawing interlock mechanism comprising:
an opening/closing operation rod (5) for performing, through rotation, switching operation between opening and closing of a circuit breaker (4);
a rotation cam (6) which is connected with the opening/closing operation rod (5) and is configured to perform a rotational movement, the rotation cam (6) being provided with a first guide (7) for assisting the rotational movement; and
an interlock rod (10) which is connected with the rotation cam (6) and is configured to convert the rotational movement of the rotation cam (6) into a linear movement, the interlock rod (10) having a bent plate shape, the interlock rod (10) being provided with a second guide (9) for assisting the linear movement, and configured such that, when the circuit breaker (4) is closed, a part of the interlock rod (10) is engageable with an engagement hole (12, 16) formed in a control center housing, wherein
a metal fitting (8) having a round hole (8a) corresponding to the rotational movement of the rotation cam (6) and an elongated hole (8b) corresponding to the linear movement of the interlock rod (10) is provided so as to surround a periphery of the opening/closing operation rod (5), **characterized in that**
the assisting for the rotational movement by the first guide (7) is performed by sliding of the first guide (7) along an arc-shaped edge of the round hole (8a), and
the assisting for the linear movement by the second guide (9) is performed by sliding of the second guide (9) along an edge of the elongated hole (8b).

2. The control center function unit having the drawing interlock mechanism according to claim 1, wherein
the first guide (7) is a pin (14) provided with a washer (13) and attached to the rotation cam (6), and the arc-shaped edge of the round hole (8a) is held between the rotation cam (6) and the washer (13), and
the second guide (9) is a pin (14) provided with a washer (13) and attached to the interlock rod (10), and the edge of the elongated hole (8b) is held between the interlock rod (10) and the washer (13).

3. A control center using the control center function unit having the drawing interlock mechanism according to claim 1 or 2.

## Patentansprüche

1. Steuerzentrale-Funktionseinheit mit einem Ziehverriegelungsmechanismus, die aufweist:
eine Öffnungs/Schließ-Betätigungsstange (5) zum Durchführen, mittels einer Rotation, eines Umschaltbetriebs zwischen einem Öffnen und Schließen eines Schutzschalters (4);
einen Rotationsnocken (6), der mit der Öffnungs/Schließ-Betätigungsstange (5) verbunden ist und der zum Durchführen einer Rotationsbewegung eingerichtet ist, wobei der Rotationsnocken (6) mit einer ersten Führung (7) zum Assistieren der Rotationsbewegung versehen ist; und
eine Verriegelungsstange (10), die mit dem Rotationsnocken (6) verbunden ist und die zum Wandeln der Rotationsbewegung des Rotationsnockens (6) in eine Linearbewegung eingerichtet ist, wobei die Verriegelungsstange (10) eine gebogene Plattenform aufweist, wobei die Verriegelungsstange (10) mit einer zweiten Führung (9) zum Assistieren der Linearbewegung versehen ist und derart eingerichtet ist, dass, wenn der Schutzschalter (4) geschlossen wird, ein Teil der Verriegelungsstange (10) mit einem Eingriffsloch (12, 16) in Eingriff bringbar ist, das in einem Steuerzentralengehäuse ausgebildet ist, wobei
eine Metallverbindungseinrichtung (8) mit einem runden Loch (8a), das der Rotationsbewegung des Rotationsnockens (6) entspricht, und mit einem Langloch (8b), das der Linearbewegung der Verriegelungsstange (10) entspricht, so vorgesehen ist, das ein Rand der Öffnungs/Schließ-Betätigungsstange (5) umgeben wird, **dadurch gekennzeichnet, dass**
das Assistieren der Rotationsbewegung durch die erste Führung (7) durchgeführt wird, indem die erste Führung (7) entlang eines bogenförmigen Rands des runden Lochs (8a) gleitet, und
das Assistieren der Linearbewegung durch die zweite Führung (9) durchgeführt wird, indem die zweite Führung (9) entlang eines Rands des Langlochs (8b) gleitet.

2. Steuerzentrale-Funktionseinheit mit einem Ziehverriegelungsmechanismus nach Anspruch 1, wobei
die erste Führung (7) ein Stift (14) ist, der mit einer Unterlegscheibe (13) versehen ist und der an dem Rotationsnocken (6) angebracht ist, und der bogenförmige Rand des runden Lochs (8a) zwischen dem Rotationsnocken (6) und der Unterlegscheibe (13) gehalten wird, und
die zweite Führung (9) ein Stift (14) ist, der mit einer Unterlegscheibe (13) versehen ist und der an der Verriegelungsstange (10) angebracht ist, und der Rand des Langlochs (8b) zwischen der Verriegelungsstange (10) und der Unterlegscheibe (13) gehalten wird.

3. Steuerzentrale, die die Steuerzentrale-Funktionseinheit mit dem Ziehverriegelungsmechanismus nach Anspruch 1 oder 2 verwendet.

## Revendications

1. Unité fonctionnelle de centre de commande ayant un mécanisme de verrouillage de retrait comprenant :
une tige de manoeuvre d'ouverture/de fermeture (5) servant à effectuer, par rotation, une opération de commutation entre l'ouverture et la fermeture d'un disjoncteur (4) ;
une came rotative (6) qui est reliée à la tige de manoeuvre d'ouverture/de fermeture (5) et est conçue pour effectuer un mouvement rotatif, la came rotative (6) étant munie d'un premier guide (7) pour assister le mouvement rotatif ; et
une tige de verrouillage (10) qui est reliée à la came rotative (6) et est conçue pour convertir le mouvement rotatif de la came rotative (6) en un mouvement linéaire, la tige de verrouillage (10) ayant une forme de plaque pliée, la tige de verrouillage (10) étant pourvue d'un second guide (9) pour assister le mouvement linéaire, et étant conçue de sorte que, lorsque le disjoncteur (4) est fermé, une partie de la tige de verrouillage (10) puisse venir en prise avec un trou de mise en prise (12, 16) formé dans un boîtier de centre de commande,
un raccord métallique (8) ayant un trou rond (8a) correspondant au mouvement rotatif de la came rotative (6) et un trou allongé (8b) correspondant au mouvement linéaire de la tige de verrouillage (10) étant fourni de sorte à entourer une périphérie de la tige de manoeuvre d'ouverture/de fermeture (5), **caractérisée en ce que**
l'assistance au mouvement rotatif par le premier guide (7) est réalisée par le glissement du premier guide (7) le long d'un bord en forme d'arc du trou rond (8a), et
l'assistance au mouvement linéaire par le second guide (9) est réalisée par le glissement du second guide (9) le long d'un bord du trou allongé (8b).

2. Unité fonctionnelle de centre de commande ayant le mécanisme de verrouillage de retrait selon la revendication 1,
le premier guide (7) étant une broche (14) munie d'une rondelle (13) et fixée à la came rotative (6), et le bord en forme d'arc du trou rond (8a) étant maintenu entre la came rotative (6) et la rondelle (13), et
le second guide (9) étant une broche (14) munie d'une rondelle (13) et fixée à la tige de verrouillage (10), et le bord du trou allongé (8b) étant maintenu entre la tige de verrouillage (10) et la rondelle (13).

3. Centre de commande utilisant l'unité fonctionnelle de centre de commande ayant le mécanisme de verrouillage de retrait selon la revendication 1 ou 2.
